# EUROPEAN PATENT APPLICATION

(11) **EP 4 166 601 A1**
(43) Date of publication of application: **19.04.2023**
(21) Application number: 21202472.3
(22) Date of filing: 13.10.2021
(51) Int. Cl.: C08J 9/00, C08J 9/10

(54) **THERMALLY EXPANDABLE RUBBER COMPOSITION**

(71) Applicant: Sika Technology AG, 6340 Baar (CH)
(72) Inventor: FUNKE, Björn, 21339 Lüneburg (DE); PLAUMANN, Jörg, 21075 Hamburg (DE); HANHÖRSTER, Thomas, 25421 Pinneberg (DE)
(74) Representative: Sika Patent Attorneys

(57) **Abstract**

Disclosed is a thermally expandable rubber composition, comprising at least one solid rubber, at least one processing oil, at least one vulcanization system, at least one filler G, 0.25 and 0.55 wt-% of 4,4'-oxybis(benzenesulfonyl hydrazide), 0.25 and 0.55 wt-% of p-toluenesulfonylhydrazide and 0.1 and 0.5 wt-% of azodicarbonic acid diamide. The thermally expandable rubber composition provides good foam structure and reduced bond line read through.

## Description

### Technical Field

The present invention relates to a thermally expandable rubber composition as well as a method of bonding substrates, especially in the automobile industry, or an article of white goods.

### Background of the Invention

Manufactured products often contain hollow parts that result from the manufacturing process and/or that are designed into the product for various purposes, such as weight reduction. Automotive vehicles, for example, include several such hollow parts throughout the vehicle, including in the vehicle's roof, engine hood, trunk hood and in vehicle doors. It is often desirable to connect/bond the parts/substrates forming the hollow parts additionally at least at certain places so as to minimise vibrations and noise through such vibrations caused upon movement of the vehicle.

A suitable rubber composition to connect these parts/substrates for vibration reduction is able to expand its volume when heat is applied in order to increase its flexibility and to reduce alterations of the surface on the bonded parts also called "read-through" for aesthetic reasons. For example, during the manufacture process of a vehicle, the hollow parts of a vehicle's roof can contain applied beads of an uncured rubber composition between roof beam and the roof layer and can still be largely covered by an electro-coating liquid while applied beads of an uncured rubber composition between upper and the lower roof layer are already inserted, and afterwards during a heat treatment step, the expandable rubber composition expands and firmly connects the two layers in order to minimise vibrations and noise through such vibrations caused upon movement of the vehicle.

Specific material properties of the cured adhesive are of fundamental importance with respect to the mentioned bond line read through (BLRT) phenomenon. Adhesive BLRT is a visible distortion of the substrate over a cured adhesive bond-line. The deformations are primarily the result of a difference in the thermal expansion coefficients between the substrate and the adhesive. With the ongoing trend of light weighting in the automotive industry (e.g.) more and more thinner sheet metals are used for car manufacturing. With decreasing steel thickness and bending stiffness BLRT effects, caused by the rubber composition, occur more frequently. Therefore, BLRT optimized rubber based adhesive compositions are inquired more and more.

It is thus desirable to obtain a thermally expandable rubber composition advantageous in terms of a more porous foam structure, a right expanded bead and a reduced shrinkage, which both are related with the BLRT performance.

### Summary of the Invention

It is an object of the present invention to provide a thermally expandable rubber composition that provides correct porous foam structure, right expanded bead and reduced BLRT phenomenon.

Surprisingly, the present invention provides a solution to that problem by providing a rubber composition, comprising
a) at least one solid rubber **A** from the group consisting of styrene-butadiene rubber, cis-1,4-polybutadiene, synthetic isoprene rubber, natural rubber, ethylene-propylene-diene rubber (EPDM), nitrile rubber, butyl rubber and acrylic rubber;
b) at least one processing oil **PO**;
c) at least one vulcanization system **VS**;
d) at least one filler **G**;
e) 0.25 and 0.55 wt-%, based on the total weight of the rubber composition, of 4,4'-oxybis(benzenesulfonyl hydrazide) **BA1;**
f) 0.25 and 0.55 wt-%, based on the total weight of the rubber composition, of p-toluenesulfonyl hydrazide **BA2;**
g) 0.1 and 0.5 wt-%, based on the total weight of the rubber composition, of azodicarbonic acid diamide **BA3.**

The composition according to the present invention is particularly suitable to be used in sound dampening/vibration reduction, for example in automotive applications. Further aspects of the present invention are subject of other independent claims. Preferred embodiments of the invention are subject of dependent claims.

### Detailed Description of the Invention

The unit term "wt.-%" means percentage by weight, based on the weight of the respective total composition, if not otherwise specified. The terms "weight" and "mass" are used interchangeably throughout this document.

Volume changes on the thermally expandable material are determined using the DIN EN ISO 1183 method of density measurement (Archimedes principle) in deionised water in combination with sample mass determined by a precision balance.

The present invention comprises a) at least one solid rubber **A** from the group consisting of styrene-butadiene rubber, cis-1,4-polybutadiene, synthetic isoprene rubber, natural rubber, ethylene-propylene-diene rubber (EPDM), nitrile rubber, butyl rubber and acrylic rubber.

Preferred solid rubbers have a molecular weight of 100'000 g/mol or more.

Preferably the at least one solid rubber **A** contains a styrene-butadiene rubber **A1.**

Preferably, the styrene-butadiene rubber **A1** is an emulsion-polymerized SBR rubber. These can be divided into two types, cold rubber and hot rubber depending on the emulsion polymerization temperature, but hot rubbers (hot type) are preferred.

Preferably, the styrene-butadiene rubber **A1** has a styrene content of from 1 to 60% by weight, preferably from 2 to 50% by weight, from 10 to 40% by weight, from 20 to 40% by weight, most preferred 20 to 30% by weight.

Particularly preferred pre-crosslinked styrene-butadiene elastomer are Petroflex^{™} SBR 1009A, 1009S and 1018 elastomers, manufactured by Petroflex, Brasil, using either rosin or fatty acids soaps as emulsifier and coagulated by the salt-acid method, and SBR 1009, 1009A and 4503 elastomers, manufactured by ISP Corporation, Texas, USA, by hot emulsion polymerization with divinylbenzene.

Preferred styrene-butadiene rubber **A1** have a Mooney viscosity (ML 1+4 at 100°C.) of 40 -150 MU (Mooney units), preferably 40 -100 MU, 55 -80 MU. Preferably, Mooney viscosity refers to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are defined in ASTM D1646.

Preferably the at least one solid rubber **A** contains a cis-1,4-polybutadiene **A2**.

Preferred cis-1,4-polybutadiene **A2** have a cis-1,4-content greater than 90% by weight, preferably greater than 95% by weight.

Preferred cis-1,4-polybutadiene **A2** have a Mooney viscosity (ML 1+4 at 100° C.) of 20 -80 MU (Mooney units), preferably 20 -60 MU, 30 -50 MU. Preferably, Mooney viscosity refers to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are defined in ASTM D1646.

It is especially preferred if the at least one solid rubber **A** is selected from styrene-butadiene rubber **A1** and cis-1,4-polybutadiene **A2**.

It is especially preferred if the at the least one solid rubber **A** contains both styrene-butadiene rubber **A1** and cis-1,4-polybutadiene **A2**.

Preferably, the weight ratio between styrene-butadiene rubber **A1** and cis-1,4-polybutadiene **A2** is from 4:1 - 1:2, preferably from 3:1 ―1:1, most preferably from 2.5:1 ― 1.5:1.

Preferably, the the total amount of the at least one solid rubber **A** is between 5 and 30 wt-%, preferably between 7.5 and 20 wt-%, most preferred between 7.5 and 12.5 wt-%, based on the total weight of the rubber composition.

The present invention comprises b) at least one processing oil **PO**.

Preferably, the processing oil **PO** is a processing oil compromising a naphthenic processing oil **PO1** and a paraffinic processing oil **PO2**.

Preferably, the total amount of the processing oil **PO** is between 20 and 50 wt-%, preferably between 20 and 40 wt-%, most preferably between 25 and 35 wt-%, based on the total weight of the rubber composition.

Preferably the weight ratio between the sum of processing oil **PO** and the sum of the solid rubber **A** (**PO** / solid rubber **A**) is from 1.8-5.5, 2.3-5.5, 2.6-5.0, 3.0-4.5, preferably from 3.25-4.0, most preferably from 3.4-4.0.

The rubber composition comprises c) at least one vulcanization system **VS**.

A large number of vulcanization systems based on elementary sulfur as well as vulcanization systems not containing elementary sulfur are suitable.

If a vulcanization system based on elementary sulfur is used, a system containing pulverulent sulfur is preferred. Such a vulcanization system preferably consists of 1 wt. % to 15 wt. %, preferably 5 wt. % to 10 wt. %, of pulverulent sulfur.

Preferably, vulcanization systems without elementary sulfur compounds are used.

These vulcanization systems without elementary sulfur include vulcanization systems based on organic peroxides, polyfunctional amines, quinones, p-benzoquinone dioxime, p-nitrosobenzene and dinitrosobenzene, as well as vulcanization systems crosslinked with (blocked) diisocyanates.

Preferably, these vulcanization systems with or without elementary sulfur can further comprise organic vulcanization accelerators as well as zinc compounds.

Organic vulcanization accelerators that are suitable include the dithiocarbamates (in the form of their ammonium or metal salts), xanthogenates, thiuram compounds (monosulfides and disulfides), thiazole compounds, aldehyde-amine accelerators (e.g. hexamethylenetetramine) as well as guanidine accelerators, most particularly preferred being dibenzothiazyl disulfide (MBTS).
These organic accelerators are used in amounts of between 0.5 and 3 wt. %, referred to the overall rubber composition.

Zinc compounds acting as vulcanization accelerators may be selected from zinc salts of fatty acids, zinc dithiocarbamates, basic zinc carbonates as well as, in particular particulate zinc oxide. The content of zinc compounds is preferably in the range between 0.5 and 3 wt. %, 1 and 3 wt. %, based on the overall rubber composition.

Preferably, the vulcanization system **VS** is a vulcanization system without elementary sulfur, preferably containing p-benzoquinone dioxime, that further comprises organic vulcanization accelerators, preferably dibenzothiazyl disulfide, as well as zinc compounds, preferably zinc oxide. Preferably such a vulcanization system is present in an amount of 1 and 8 wt.-%, preferably 2 and 7 wt.-%, more preferably 3 and 6 wt.-%, based on the weight of the overall rubber composition.

The rubber composition comprises d) at least one filler **G**.

Suitable as fillers are, e.g., ground or precipitated calcium carbonate, lime, calcium-magnesium carbonate, talcum, gypsum, graphite, barite, silica, silicates, mica, wollastonite, carbon black, or the mixtures thereof, or the like.

Preferably the filler **G** is selected from ground calcium carbonate, precipitated calcium carbonate and lime.

Preferably, the total amount of the at least one filler **G** is between 30 and 60 wt-%, preferably between 35 and 55 wt-%, most preferably between 40 and 50 wt-%, based on the total weight of the rubber composition. In case the amount is more than 60 wt-% the viscosity might increase too much. An amount of less than 30 wt-% leads to a reduction in in sag resistance.

The rubber composition comprises:
e) 0.25 and 0.55 wt-%, based on the total weight of the rubber composition, of 4,4'-oxybis(benzenesulfonyl hydrazide) **BA1;**
f) 0.25 and 0.55 wt-%, based on the total weight of the rubber composition, of p-toluenesulfonyl hydrazide **BA2**;
g) 0.1 and 0.5 wt-%, based on the total weight of the rubber composition, of azodicarbonic acid diamide **BA3**.

Surprisingly, it was found that the absence in the rubber composition of **BA2** and /or **BA3** can lead to low volume expansion percentages the thermally expandable rubber composition and bad BLRT performance. This effect can be seen in the examples E1, E6, E7 and E9 shown in Tables 2 and 3.

It is further preferred that the weight ratio of the sum 4,4'-oxybis(benzenesulfonyl hydrazide) **BA1** and p-toluenesulfonyl hydrazide **BA2** to azodicarbonic acid diamide **BA3** ((BA1+BA2) / BA3) is from 1.5―6, 2―5, preferably 3 - 4.5, most preferably 3.5 - 4.5.

Such a ratio is advantageous for a correct porous foam structure, right bead expansion and improved BLRT performance. This can be seen, for example, in Tables 2 and 3 with the comparison of E2 and E8 with the rest of the compositions.

It is even more preferred that the weight ratio of solid rubber **A** to the sum 4,4'-oxybis(benzenesulfonyl hydrazide) **BA1** and p-toluenesulfonyl hydrazide **BA2** and azodicarbonic acid diamide **BA3** (A / (BA1+BA2+BA3)) is from 2-30, 5 - 25, 5 - 20, preferably 7 - 15, most preferably 8 ― 12.

This ratio is advantageous for controlling volume expansion of the thermally expandable rubber composition. This can be seen in Table 2 and 3 with the comparison of the different examples.

It is also preferred that the weight ratio of solid rubber **A** to 4,4'-oxybis(benzenesulfonyl hydrazide) **BA1** (A / BA1) and/or, preferably and, the weight ratio of solid rubber A to p-toluenesulfonyl hydrazide **BA2** (A / BA2) is from 20- 30, preferably 22 - 28, most preferably 24 - 26.

It is further preferred that the weight ratio of solid rubber A to azodicarbonic acid diamide **BA3** (A / BA3) is from 20-100, 25-90, preferably 30-80, most preferably 40-60.

Known blowing agents in the state of the art may be a chemical or physical blowing agents. Chemical blowing agents are organic or inorganic compounds that decompose under influence of, e.g., temperature or humidity, while at least one of the formed decomposition products is a gas. Physical blowing agents include, but are not limited to, compounds that become gaseous at a certain temperature. Thus, both chemical and physical blowing agents are suitable to cause an expansion in thermally expandable compositions.

Preferably, the rubber composition contains less than 5 wt.-% of chemical or physical blowing agents other than 4,4'-oxybis(benzenesulfonyl hydrazide) **BA1,** p-toluenesulfonyl hydrazide **BA2** and azodicarbonic acid diamide **BA3,** based on the total weight of the rubber composition. More preferably, the rubber composition contains less than 2 wt.-%, less than 1 wt.-%, less than 0.5 wt.-%, less than 0.1 wt.-%, less than 0.01 wt.-%, most preferably 0 wt.-%, of chemical or physical blowing agents other than 4,4'-oxybis(benzenesulfonyl hydrazide) **BA1,** p-toluenesulfonyl hydrazide **BA2** and azodicarbonic acid diamide **BA3,** based on the total weight of the rubber composition.

Preferably, the blowing agent is included in the present inventive composition with an amount of between 0.1 and 2 wt.-%, 0.2 and 1.5 wt.-%, 0.3 and 1.5 wt.-%, preferably between 0.4 and 1.2 wt.-%, more preferably between 0.6 and 1.2 wt.-%, based on the total weight of the rubber composition.

Apart from the essential ingredients, the present inventive rubber composition may contain other components commonly used in such compositions and known to the ordinarily skilled artisan in the field. These include, for example colorants, adhesion promoters, antioxidants and the like.

The rubber composition preferably has a viscosity of 30 to 3000 Pas at 45°C, preferably from 150 to 600 Pas at 45°C.

The viscosity is measured according to DIN 54458 with an oscillational/rotational rheometer by oscillographic means using a rheometer having a heatable plate (MCR 301, AntonPaar) with the following settings: gap 1 mm, plane spindle diameter: 25 mm, deformation 0,05% at 10 Hz, parameter set for A1 static state viscosity according to DIN 54458.

The cured rubber composition preferably has a volume increase compared to the uncured composition of between 50 - 120%, preferably 60 - 90%,_most preferred 60 - 75%. Preferably the volume increase is determined using the DIN EN ISO 1183 method of density measurement (Archimedes principle) in deionised water in combination with sample mass determined by a precision balance.
Preferably the values for volume increase (expansion) are determined as mentioned in the experimental section.

The compositions according to the present inventions can be manufactured by mixing the components in any suitable mixing apparatus, e.g. in a dispersion mixer, planetary mixer, double screw mixer, continuous mixer, extruder, or dual screw extruder.

Preferably, the at least one solid rubber A and the processing oil **PO** Are mixed in a separate step using a kneader, preferably a sigma blade kneader until a homogenous mixture is obtained. This homogenous mixture is then preferably mixed with the remaining components of the rubber composition in the suitable mixing apparatus mentioned above.

It may be advantageous to heat the components before or during mixing, either by applying external heat sources or by friction generated by the mixing process itself, in order to facilitate processing of the components into a homogeneous mixture by decreasing viscosities and/or melting of individual components. However, care has to be taken, e.g. by temperature monitoring and use of cooling devices where appropriate, not to exceed the activation temperatures of the blowing agent **BA** and/or vulcanization system VS.

A further aspect of the present invention relates to a **method** of bonding substrates, especially metal substrates, comprising the steps of
a) applying a rubber composition of the invention as defined above to a first substrate, especially a metal substrate, more preferably an oiled metal substrate;
b) contacting the rubber composition applied with a second substrate, especially a metal substrate, more preferably an oiled metal substrate, to form an adhesive bond; and
c) curing the rubber composition in the adhesive bond at a temperature in the range from 150 to 200°C.

The first and/or second substrate, especially metal substrate, may each be used as such or as part of an article, i.e. of an article comprising the first or second substrate, especially metal substrate. Preferably, the substrates, especially metal substrates, more preferably oiled metal substrates, are used as such. The first and second substrates, especially metal substrates, may be made from the same or different materials.

The first and/or second substrates are preferably metal substrates. If appropriate, however, heat-resistant plastics, are also conceivable as first and/or second substrate.

Suitable first and/or second metal substrates are in principle all the metal substrates known to the person skilled in the art, especially in the form of a sheet, as utilized, for example, in the construction of modes of transport, for example in the automobile industry, or in the production of white goods. Preferably these metal substrates are oiled substrates meaning they are covered with corrosion protection oils known to the person skilled in the art. An example of such a corrosion protection oil is Anticorit PL 3802-39S.

Examples of the first and/or second metal substrate are metal substrates, especially sheets, of steel, especially electrolytically galvanized steel, hot-dip galvanized steel, bonazinc-coated steel, and subsequently phosphated steel, and also aluminium, especially in the variants that typically occur in automaking, and also magnesium or magnesium alloys. Preferably the substrates are oiled substrates.

The rubber composition is applied to the first substrate, especially metal substrate, in step (a) of the method of the invention. This is effected, for example, at an application temperature of the rubber composition of 10°C to 80°C, preferably of 25°C to 50°C, more preferably of 30 to 40°C. The application is preferably effected in the form of a bead. Automatic application is preferred.

The rubber composition can be applied over the entire surface or over part of the surface of the first substrate, especially metal substrate. In a typical application, the rubber composition can be applied, for example, only on a part, preferably less than 20 %, less than 10 %, less than 5 %, preferably less than 2 %, of the surface of the substrate facing the second substrate.

In a further step, the rubber composition applied to the first substrate, especially metal substrate, is contacted with the second substrate, especially metal substrate, in order to form an adhesive bond.

To cure the rubber composition in the adhesive bond, the rubber composition is heated to a temperature in the range from 150 to 180°C, 150 to 170°C, preferably 150 to 160°C, most preferably 160°C. The heating can be effected, for example, by means of infrared radiation or induction heating or in an oven, for example a cathodic electrocoating oven. In this way, the adhesive bond with the rubber composition is obtained.
Preferably the duration of said heating step is from 10 - 60 min, preferably 10 -40 min, 10 -30 min, most preferably 10―20 min.

The rubber composition in the adhesive bond can be cured in one step, but curing in two or more steps is also possible, in which case intermediate operating steps between or during the curing steps are possible, for example a wash and/or a dip-coating operation, for example a cathodic electrocoating operation, of one or both substrates, especially metal substrates, with a subsequent wash.

The rubber composition of the invention and the method of the invention are especially suitable for bonding of substrates, especially metal substrates, for the manufacture of modes of transport, especially automobiles, buses, trucks, rail vehicles, ships or aircraft, or white goods, especially washing machines, tumble dryers or dishwashers, or parts thereof, preferably motor vehicles or installable components thereof.

Hence another aspect of the present invention is an **article** obtained from said method, especially a construction of modes of transport, especially in the automobile industry, or an article of white goods.

Hence another aspect of the present invention is the **use** of the rubber composition as described above for bonding of substrates, especially metal substrates, for the manufacture of modes of transport, especially automobiles, buses, trucks, rail vehicles, ships or aircraft, or white goods, especially washing machines, tumble dryers or dishwashers, or parts thereof, especially to reduce vibrations and noise through such vibrations caused upon movement of the bonded substrates.

Preferably the blowing agent **BA** has the preferred features and/or ratios as mentioned before. It is further preferred that the curing of the rubber composition was performed at mentioned temperature for 10 - 60 min, preferably 10 -40 min, 10 -30 min, most preferably 10 - 20 min.

The invention is further explained in the following experimental part which, however, shall not be construed as limiting the scope of the invention.

### Examples

### Chemicals used for formulating rubber compositions:

**Table 1**

| ***Ingredient*** | **Description** |
|---|---|
| Solid rubber **A1** | styrene-butadiene rubber, solid, Mooney viscosity 55-80 (ML 1+4 at 100° C, ASTM D1646), styrene content 20 - 30% |
| Solid rubber **A2** | cis-1,4-polybutadiene, solid, Mooney viscosity 30 -50 (ML 1+4 at 100° C, ASTM D1646), cis-1,4-content greater than 95 % |
| Naphthenic processing oil **PO1** | CAS: 64742-52-5, Distillates (petroleum) hydrotreated heavy naphthenic |
| Paraffinic processing oil **PO2** | CAS No. 64742-65-0, Solvent-dewaxed heavy paraffinic distillate |
| CaCO₃, natural | natural ground calcium carbonate |
| CaCO₃, precipitated | precipitated calcium carbonate |
| Lime | Lime, ground |
| Vulcanisation system **VS** | Mixture comprising p-benzoquinone dioxime, 2,2'-dibenzothiazyl disulfide and zinc oxide in powder form. |
| B-Agent OBSH **BA1** | Blowing agent, 4,4'-oxybis(benzenesulfonyl hydrazide) (OBSH, CAS No. 80-51-3 |
| B-Agent TSH **BA2** | Blowing agent, p-toluenesulfonyl hydrazide, (TSH, CAS No. 1576-35-8) |
| B-Agent ADCA **BA3** | Blowing agent, Azodicarbonamide (ADCA, CAS No. 123-77-3) |

All inventive (E2 and E8) and non-inventive (E1, E3-E7 and E9- E11) example compositions shown in table 2 were prepared according to the following procedure:
In a first step, the solid rubber **A1** and solid rubber **A2** were mixed in a sigma blade kneader for 15 min. After that, the processing oils were added constantly over a time of 5 hours. After this, the obtained mixture is blended with all the remaining components by using a lab scale mixer (Speedmixer^{®}) (total weight of the final composition approximately 350 g) and mixed during 5 min (total). The mixed rubber compositions were then stored in sealed cartridges.

**Table 2**

| ***Composition*** | **E1** | **E2** | **E3** | **E4** | **E5** | **E6** | **E7** | **E8** | **E9** | **E10** | **E11** |
|---|---|---|---|---|---|---|---|---|---|---|---|
| ***Ingredient*** | | | | | | | | | | | |
| Solid rubber **A1** | 6.4 | 6.4 | 6.4 | 6.4 | 6.4 | 6.4 | 6.4 | 6.4 | 6.4 | 6.4 | 6.4 |
| Solid rubber **A2** | 3.6 | 3.6 | 3.6 | 3.6 | 3.6 | 3.6 | 3.6 | 3.6 | 3.6 | 3.6 | 3.6 |
| Naphthenic processing oil **PO1** | 18.8 | 18.8 | 18.8 | 18.8 | 18.8 | 18.8 | 18.8 | 18.8 | 18.8 | 18.8 | 18.8 |
| Paraffinic processing oil **PO2** | 18.8 | 18.8 | 18.8 | 18.8 | 18.8 | 18.8 | 18.8 | 18.8 | 18.8 | 18.8 | 18.8 |
| CaCO3, natural | 33 | 33 | 33 | 33 | 33 | 33 | 33 | 33 | 33 | 33 | 33 |
| CaCO₃, precipitated | 10 | 10 | 10 | 10 | 10 | 10 | 10 | 10 | 10 | 10 | 10 |
| Lime | 4 | 4 | 4 | 4 | 4 | 4 | 4 | 4 | 4 | 4 | 4 |
| Vulcanisation system | 5 | 5 | 5 | 5 | 5 | 5 | 5 | 5 | 5 | 5 | 5 |
| B-Agent OBSH BA1 | 0.73 | 0.4 | 0.2 | 0.6 | --- | 0.4 | 0.4 | 0.33 | 0.74 | --- | --- |
| B-Agent THS **BA2** | --- | 0.4 | 0.2 | 0.6 | 0.4 | --- | 0.4 | 0.33 | --- | 0.74 | 0.5 |
| B-Agent ADCA **BA3** | --- | 0.2 | 0.1 | 0.3 | 0.2 | 0.2 | --- | 0.33 | 0.2 | 0.2 | 0.5 |
| Sum (weight-parts) | 100.33 | 100.6 | 100.1 | 101.1 | 100.2 | 100.2 | 100.4 | 100.59 | 100.54 | 100.54 | 100.6 |
| Ratio (BA1+BA2 / BA3) | --- | 4 | 4 | 4 | 2 | 2 | --- | 2 | 3.7 | 3.7 | 1 |
| Solid rubber / Blowing agent (A/(BA1+BA2+BA3)) | 13.7 | 10 | 20 | 6.7 | 16.7 | 16.7 | 12.5 | 10.1 | 10.6 | 10.6 | 10 |
| Solid rubber / OBSH **(A / BA1)** | 13.7 | 25 | 50 | 16.7 | --- | 25 | 25 | 30.3 | 13.5 | --- | --- |
| Solid rubber / THS **(A / BA2)** | --- | 25 | 50 | 16.7 | 25 | --- | 25 | 30.3 | --- | 13.5 | 20 |
| Solid rubber / ADCA **(A / BA3)** | --- | 50 | 100 | 33.3 | 50 | 50 | --- | 30.3 | 50 | 50 | 20 |

**Table 3, n.d.=not determined**

| **Composition** | **E1** | **E2** | **E3** | **E4** | **E5** | **E6** | **E7** | **E8** | **E9** | **E10** | **E11** |
|---|---|---|---|---|---|---|---|---|---|---|---|
| Bond Line Read-Through (BLRT) | -- | + | - | + | + | - | - | + | -- | - | - |
| Expansion (%) | 35.1 | 65.9 | 36.4 | 130.7 | 49.4 | 42.3 | 46.9 | 82.4 | n.d. | n.d. | n.d. |
| Porosity | + | + | - | - | +/- | + | +/- | +/- | n.d. | - | - |

### Determination of expansion

The volume increase is determined using the DIN EN ISO 1183 method of density measurement (Archimedes principle) in deionised water in combination with sample mass determined by a precision balance.

### Determination of read-through

The compositions were applied as a single bead (50 mm length, 12 mm diameter, doctor knife application) in the center of a test specimen (steel EG (DC06+ZE 75/75), thickness 0.25 mm, 150 × 105 mm). The specimen was than fixed in a special frame and a thin and only one side-painted steel sheet (DC01 C590 0,25 mm) was put on top of the other specimen (non-painted side wetted by the bead applied composition) with a distance of 4,5 mm (use of Teflon^{®} spacer). Both sheet metals were fixed at the outer edges by screwing the frame segments together. The test specimen was then put into an oven at 250 °C for 20 min, and kept there for further 18min at reduced heating at 220 °C. After cooling to 23 °C, the upper side of the specimen (white painted sheet metal surface) was analyzed with a deflectometer. The complete specimen is placed inside the deflectometer chamber and the white painted steel surface is illuminated by a periodic pattern of parallel white and black lines. A camera records the pattern reflected by the white sheet metal surface. By computational post processing of the data (filtering and profile extraction) a potential distortion can be visualized.

The obtained curvature profile was then compared with the result obtained by using a bead consisting of a commercial state of the art product as reference. Compositions with a curvature profile similar, respectively slightly better, in terms of BLRT-performance than the one obtained with the reference composition were labeled "--" or "-" respectively. Compositions with a significantly improved curvature profile (no significant bond-line-read-through detectable) compared to the one obtained with the reference were labeled "+".

### Determination of porosity good ="+"; bad = "-"; acceptable: "+/-"

Porosity of the baked beads (doctor knife application on steel plates HX420LAD+Z100MBO (50 × 25 × 1,5 mm), 50 mm length, 12 mm diameter) is visually analyzed by observing the cross-section of the bead after the oven bake (180 °C, 25 min, total oven time). The homogeneity of the pore size distribution and pore size itself is rated based on the following criteria/scaling system: Compositions that show fine and homogeneous pores were labeled with "+". Compositions with courser pores and non-homogeneously distributed pore sizes were labeled with "-". Compositions with inferior qualities compared to those labeled with "+" but still acceptable performance were labeled with "+/-".

The values for the read-through, the volume expansion as well as the porosity are shown in Table 3.

The weight ratio of the sum 4,4'-oxybis(benzenesulfonyl hydrazide) **BA1** and p-toluenesulfonyl hydrazide **BA2** to azodicarbonic acid diamide **BA3** is shown in Table 2 as "Ratio ((BA1 +BA2) / BA3)".

The weight ratio of solid rubber **A** to the sum 4,4'-oxybis(benzenesulfonyl hydrazide) **BA1** and p-toluenesulfonyl hydrazide **BA2** and azodicarbonic acid diamide **BA3** is shown in Table 2 as "Solid rubber / Blowing agent (A / (BA1+BA2+BA3))".

The weight ratio of solid rubber **A** to 4,4'-oxybis(benzenesulfonyl hydrazide) **BA1** is shown in Table 2 as "Solid rubber / OBSH (A / BA1)".

The weight ratio of solid rubber **A** to p-toluenesulfonyl hydrazide **BA2** is shown in Table 2 as "Solid rubber / THS (A / BA2)".

The weight ratio of solid rubber **A** to azodicarbonic acid diamide **BA3** is shown in Table 2 as "Solid rubber / ADCA (A / BA3)".

## Claims

1. Rubber composition, comprising
a) at least one solid rubber **A** from the group consisting of styrene-butadiene rubber, cis-1,4-polybutadiene, synthetic isoprene rubber, natural rubber, ethylene-propylene-diene rubber (EPDM), nitrile rubber, butyl rubber and acrylic rubber;
b) at least one processing oil **PO**;
c) at least one vulcanization system **VS**;
d) at least one filler **G**;
e) 0.25 and 0.55 wt-%, based on the total weight of the rubber composition, of 4,4'-oxybis(benzenesulfonyl hydrazide) **BA1;**
f) 0.25 and 0.55 wt-%, based on the total weight of the rubber composition, of p-toluenesulfonyl hydrazide **BA2**;
g) 0.1 and 0.5 wt-%, based on the total weight of the rubber composition, of azodicarbonic acid diamide **BA3**.

2. Rubber composition according to Claim 1, **characterized in that** the weight ratio of the sum 4,4'-oxybis(benzenesulfonyl hydrazide) **BA1** and p-toluenesulfonyl hydrazide **BA2** to azodicarbonic acid diamide **BA3** ((BA1+BA2) / BA3) is from 1.5 - 6, 2 - 5, preferably 3 - 4.5, most preferably 3.5-4.5.

3. Rubber composition according to any of the preceding claims, **characterized in that** the weight ratio of solid rubber **A** to the sum 4,4'-oxybis (benzenesulfonyl hydrazide) **BA1** and p-toluenesulfonyl hydrazide **BA2** and azodicarbonic acid diamide **BA3** (A / (BA1+BA2+BA3)) is from 2- 30, 5 - 25, 5 - 20, preferably 7 - 15, most preferably 8-12.

4. Rubber composition according to any of the preceding claims, **characterized in that** the weight ratio of solid rubber **A** to 4,4'-oxybis (benzenesulfonyl hydrazide) **BA1** (A / BA1) and the weight ratio of solid rubber **A** to p-toluenesulfonyl hydrazide **BA2** (A / BA2) is from 20- 30, preferably 22 - 28, most preferably 24 - 26.

5. Rubber composition according to any of the preceding claims, **characterized in that** the weight ratio of solid rubber **A** to azodicarbonic acid diamide **BA3** (A / BA3) is from 20-100, 25-90, preferably 30-80, most preferably 40-60.

6. Rubber composition according to any of the preceding claims, wherein the at least one solid rubber **A** is selected from styrene-butadiene rubber **A1** and cis-1,4-polybutadiene **A2**.

7. Rubber composition according to claim 6, wherein the weight ratio between styrene-butadiene rubber **A1** and cis-1,4-polybutadiene **A2** is from 4:1 ― 1:2, preferably from 3:1 - 1:1, most preferably from 2.5:1 - 1.5:1.

8. Rubber composition according to any of the preceding claims, wherein the total amount of the at least one solid rubber **A** is between 5 and 30 wt-%, preferably between 7.5 and 20 wt-%, most preferred between 7.5 and 12.5 wt-%, based on the total weight of the rubber composition.

9. Rubber composition according to any of the preceding claims, wherein the at least one processing oil **PO** comprising a naphthenic processing oil **PO1** and a paraffinic processing oil **PO2**.

10. Rubber composition according to any of the preceding claims, wherein the total amount of the processing oil **PO** is between 20 and 50 wt-%, preferably between 20 and 40 wt-%, most preferably between 25 and 35 wt-%, based on the total weight of the rubber composition.

11. Rubber composition according to any of the preceding claims, **characterized in that** the weight ratio between the sum of the processing oil **PO** and the sum of the solid rubber **A** (**PO** / solid rubber **A**) is from 1.8-5.5, 2.3-5.5, 2.6-5.0, 3.0-4.5, preferably from 3.25-4.0, most preferably from 3.4-4.0.

12. Rubber composition according to any of the preceding claims, wherein the at least one vulcanization system **VS** is a vulcanization system without elementary sulfur, preferably containing p-benzoquinone dioxime, that further comprises organic vulcanization accelerators as well as zinc compounds.

13. Method of bonding substrates, especially metal substrates, comprising the steps of
a) applying a rubber composition according to any of Claims 1 to 12 to a first substrate, especially a first metal substrate;
b) contacting the rubber composition applied with a second substrate, especially a second metal substrate, to form an adhesive bond; and
c) curing the rubber composition in the adhesive bond at a temperature in the range from 150 to 200°C.

14. Article obtained from the method of claim 13, especially a construction of modes of transport, especially in the automobile industry, or an article of white goods.

15. Use of a rubber composition according to any of Claims 1 to 12 for bonding of substrates, especially metal substrates, for the manufacture of modes of transport or white goods, especially to reduce vibrations and noised through such vibrations caused upon movement of the bonded substrates.
